# EUROPEAN PATENT APPLICATION

(11) **EP 1 033 176 A2**
(43) Date of publication of application: **06.09.2000**
(21) Application number: 00104140.9
(22) Date of filing: 29.02.2000
(51) Int. Cl.: B05B 13/02, B05B 15/12, B05C 9/10

(54) **Method and plant for the painting of wooden doors and windows or the like**

(30) Priority: 02.03.1999 IT BO990090
(71) Applicant: CEFLA SOC. COOP. A R.L., I-40026 Imola, Bologna (IT)
(72) Inventor: Baroncini, Bruno, 40026 Imola, Province of Bologna (IT); Dovadola, Massimo, 48022 Lugo, Province of Ravenna (IT)
(74) Representative: Porsia, Dino, Dr.

(57) **Abstract**

The painting cycle is carried out on the individual straight parts (P) which will make up the window and each part is provided with at least two removable staples (1) driven into areas of the part which will not be visible subsequently, for example the areas which will be in contact with the glass or the glazing bead, or which will face the secondary frame, and the parts will be suspended by these staples in single file from suspension bars (B) connected to an overhead conveyor system, in such a way that the parts are positioned with their greatest dimensions horizontal and with these greatest dimensions aligned with the direction of advance of the suspension bars. Suspended from the suspension bars, the parts are conveyed through suitable treatment units, from which they emerge in a painted and dried state, after which the parts are discharged and stacked, enabling the storage space to be used in a rational and complete way. Subsequently, after having the aforesaid suspension staples removed, the parts can be taken from the store and assembled for the manufacture of windows which will be pre-painted and ready for sale. All the operations of impregnation, sanding and final painting are carried out simultaneously on all sides of the parts suspended from the conveyor line. It is also possible to use drying methods which provide a considerable reduction in treatment time and which enable the quality of the treatment to be improved.

## Description

The invention relates to a method and a corresponding installation for painting wooden frames, particularly for painting windows, French windows or the like. In the following text, for the sake of convenience, reference will be made to windows only, without thereby limiting the scope of application of the invention.

Windows are, for the most part, products which have standard dimensions, and large industries tend to produce them on the basis of sales forecasts and then store them while awaiting orders. The usual practice at the present time is to construct the frames and secondary frames of the windows and then to subject these products to the stages of impregnation, drying and sanding, followed by painting and subsequent drying, after which the painted windows are stacked in the stores, taking up a considerable volume because of the considerable internal space of the frames and secondary frames which remains empty and unusable.

In addition to this disadvantage, there is the fact that, when the painting is carried out by automated installations, with the window carried from one station to the next by means of an overhead chain conveyor, the installation is of considerable height, of the order of approximately five metres on average, since it is matched to the maximum size of the windows to be treated. This condition results in the construction of installations which have very large overall dimensions and treatment chambers of ample dimensions, with consequent problems, for example in the impregnation and painting chambers, owing to the large internal volume of these chambers and the consequent large body of air to be treated, and the large size of the means for recovering the excess impregnant or paint which is sprayed; and which are subject to problems in the drying tunnels, owing to the large internal volumes of these means and the consequent large body of air to be treated and the large amount of thermal energy which has to be used.

Other problems are encountered in the impregnation and painting chambers because of the difficulty of operating in a uniform way on the vertical parts of a moving piece, and therefore in order to partly overcome this disadvantage the spray guns for the impregnant or for the paint are moved while the piece continues to move or while it is temporarily halted.

Other problems are encountered in the sanding stage which is carried out at least between the impregnation stage and the painting stage, and in order to partly overcome these it is necessary to operate on the window while it is stationary. Clearly, the cyclic stopping of the windows to be treated extends the times and increases the costs of the whole treatment cycle.

The invention is intended to overcome these and other disadvantages of the known art with the following idea for a solution. The painting cycle is carried out on individual straight parts which will constitute the window, and each part is provided with at least two removable staples or eyes, driven into areas of the part which will not be visible subsequently, for example the areas which will be in contact with the glass or the bead or which will face the secondary frame, and corresponding hooks, by means of which the part will be suspended from a suspension bar fixed to the overhead conveyor chain, will be fixed to these eyes, in such a way that the part is positioned with its greatest dimension horizontal and in such a way that this greatest dimension is aligned with the direction of advance of the part. This condition makes it possible to achieve the following advantages:
- it is possible to provide a painting installation of limited height, for example one about half as high as a conventional installation;
- the horizontal arrangement of the parts and their simplified linear shape makes it possible to carry out the stages of impregnation, sanding and painting on the parts while they are moving, with a considerable containment of the time and cost of the whole treatment cycle. Furthermore, the horizontal arrangement of the parts makes it possible to impregnate, sand and paint the parts in a uniform way and simultaneously on all their sides, without ever detaching the parts from the conveyor line, and makes it possible to use treatment means which are basically of the fixed or static type;
- the horizontal arrangement of the parts and their consequent limited size in the vertical direction makes it possible to provide impregnation and painting chambers of limited volume, which are easier to control pneumatically to prevent dispersion of the sprayed liquids to the exterior and in which it is easier to recover excess quantities of these liquids. This condition also makes it possible to limit the volume of the drying tunnels and to use radiant sources of a dedicated type, of limited power, which can act uniformly over the whole surface of the parts passing before them. It is therefore possible to use drying methods which limit the drying cycle times and which simultaneously introduce considerable improvements in quality.

When the parts leave the final paint drying stage, they are stacked, using the storage space in a rational and complete way, and, when the sales orders for the windows arrive, the individual parts required for the construction of the windows of the requisite dimensions are collected from the store and assembled.

Further characteristics of the invention and the advantages derived therefrom will be made clearer by the following description of a preferred embodiment of the invention, illustrated purely by way of example, and without restrictive intent, in the figures of the thirteen sheets of drawings attached, in which:
- Fig. 1 shows in a perspective view one of the parts which make up the window, prepared for entry into the painting installation in question;
- Figs. 2 and 3 show schematically and in plan view two different parts, complementary to each other, of an installation according to the invention;
- Fig. 4 is a lateral elevation, as indicated by the arrow IV in Figure 2, of a portion of the initial branch of the installation, provided with the impregnation unit;
- Figs. 5, 5a and 6, 6a show complementary parts of the installation viewed through the section lines V-V and VI-VI respectively of Figures 2 and 3;
- Fig. 7 is a lateral elevation, as indicated by the arrow VII in Figure 3, of a portion of the initial branch of the installation, provided with the impregnation unit;
- Fig. 8 shows a longitudinal section through the impregnation unit;
- Figs. 9 and 10 show further details of the impregnation unit, viewed through the cross section lines IX-IX and X-X respectively of Figure 8;
- Fig. 11 is a schematic plan view of the sanding unit;
- Fig. 12 shows schematically and in a front view the positioning of the sanding brushes in the unit of Figure 11;
- Fig. 13 shows schematically details relating to the means of support and transfer of each abrasive brush of the sanding unit of Figure 11;
- Fig. 14 shows schematically the association of suction means with each brush of the unit of Figure 11, for the removal of dust produced by the sanding;
- Fig. 15 is a schematic front elevation of the means of supporting and conveying the parts in the unit of Figure 11;
- Fig. 16 is a schematic front elevation of the opto-electronic means positioned in the initial part of the unit of Figure 11, to detect the profile of the part to be sanded and to cause the activation of the brushes whose orientation is suitable for the detected profile;
- Fig. 17 shows a longitudinal section through the painting unit;
- Fig. 18 shows further details of the painting unit, viewed through the section line XVIII-XVIII of Figure 17;
- Fig. 19 shows in lateral elevation the overhead line for conveying the parts in the area of entry into the painting unit;
- Fig. 19a shows a front view of a part suspended from a component of the suspension bar which conveys the part through the painting installation;
- Fig. 19b shows a front view of the suspension bar suspended from a corresponding carriage which in turn interacts with the overhead chain conveyor;
- Fig. 19c shows a perspective view of a possible stabilizing configuration of the lower hooked end of the holders on which the parts to be painted are hooked:
- Fig. 20 shows a cross section through one of the tunnels of the installation used for the setting and drying of the impregnant or the paint;
- Fig. 21 shows in a schematic lateral elevation the transfer and storage unit which receives the suspension bars with the parts on exit from the paint drying tunnel and from which the painted parts are extracted at the end of the cycle.

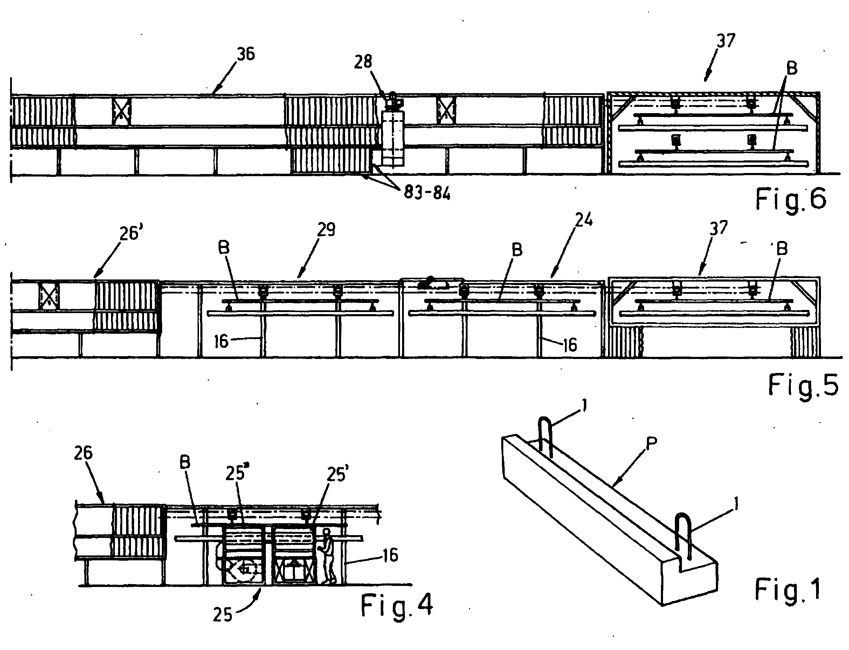

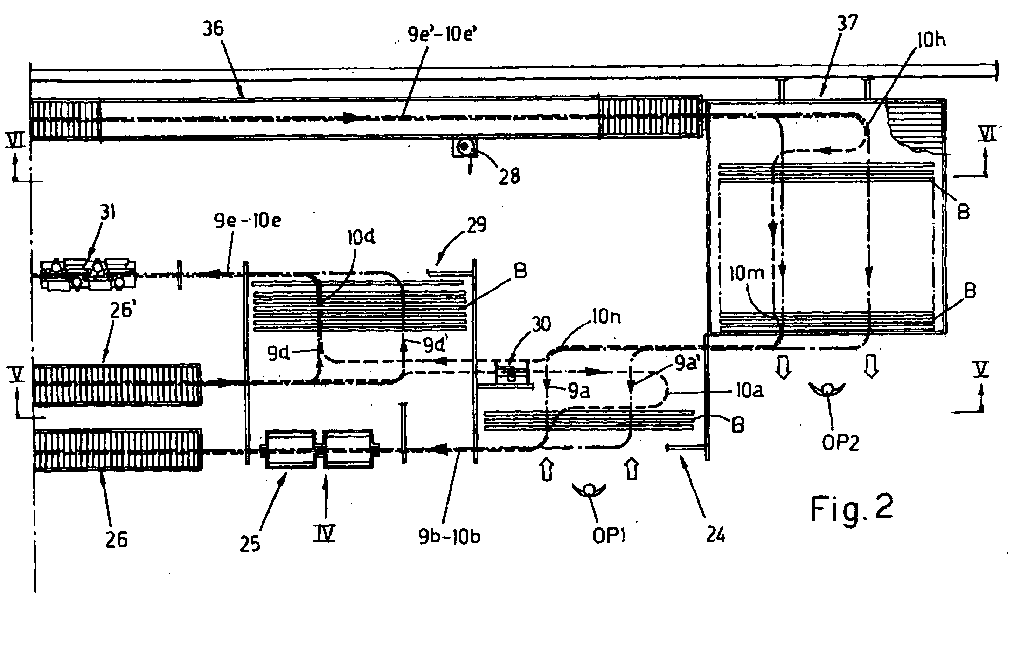

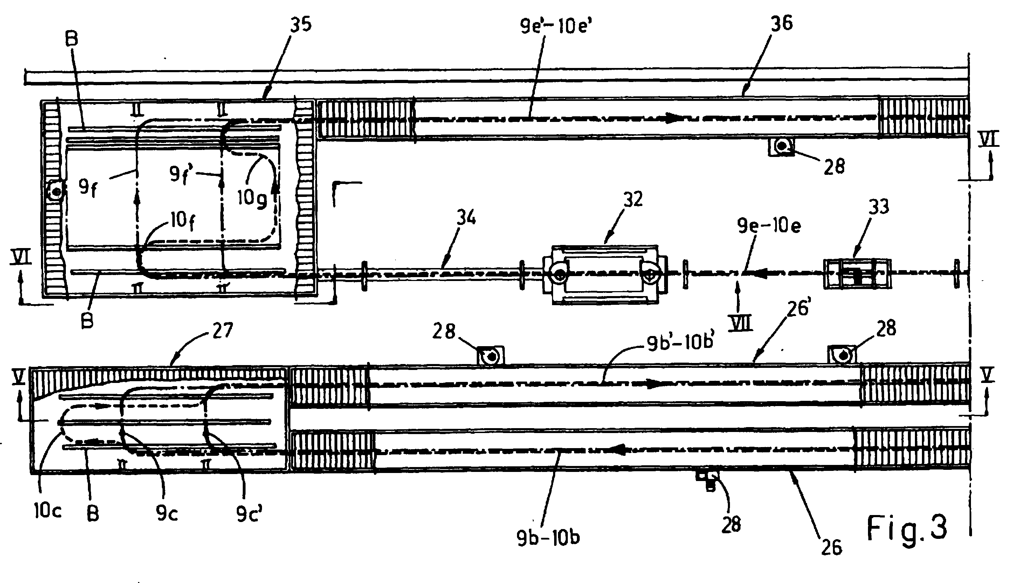

In Figure 1, the letter P indicates one of the parts which make up, for example, the frame or secondary frame of a window. A first stage of operation of the process described here consists in driving long metal staples or arches 1, at least two of which are provided for each part, and which have a sufficiently symmetrical arrangement, project by an equal amount, and are preferably located on a theoretical plane which contains the longitudinal axis of the part, into an area of the part which will not be visible subsequently, for example into the area which will subsequently be in contact with the glass or the bead. The staples 1 can be driven in, for example, with a gun of the same type as those used for nailing the planks which make up goods loading pallets, suitably modified to ensure that the metal staple is driven in only partially and to a constant depth, in such a way that it projects by an equal amount, the hole being done in a way which is understandable and can easily be implemented by a person skilled in the art.

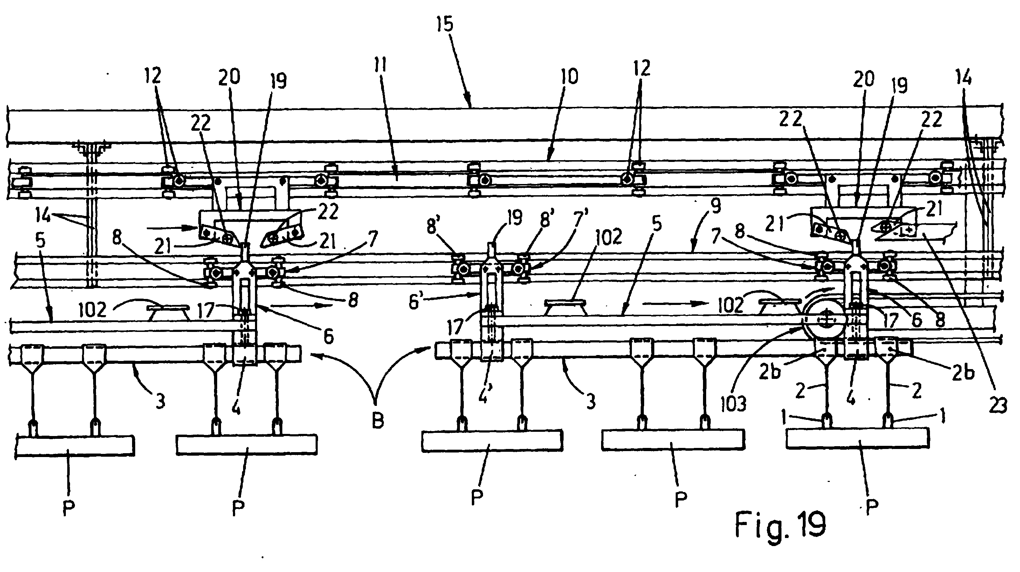

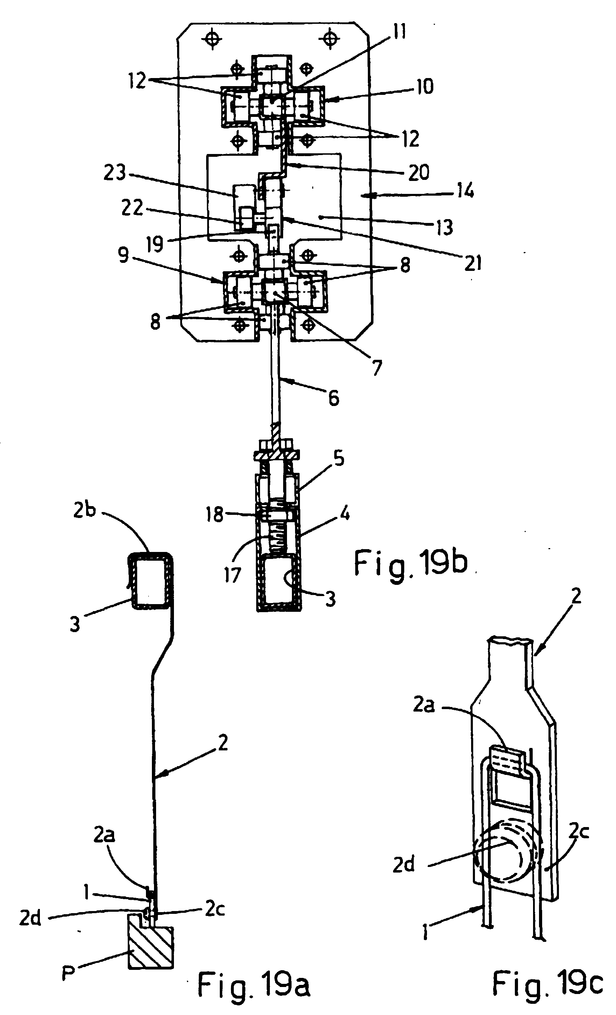

Figures 19, 19a, 19b and 19c show how the staples 1 of the parts are hooked on the lower hooked ends 2a of holders 2 whose upper ends 2b, which are also hooked and flat, are hooked on the tubular parallel beam 3 of one of the suspension bars B which convey the parts during the treatment cycle. Figure 19c shows how the lower end of a holder 2 can be provided with at least one flat appendage 2c which extends below the hook 2a and which beam against the vertical arms of the staples 1 to prevent the part from swinging while it is being conveyed. The staples 1 can be fixed at precise distances from the centre of gravity of the part, which will be suspended on the hooks 2a in such a way that the staples are pressed by gravity against the said appendage 2c. A shaped projection 2d capable of, for example, being snap-fitted between the uprights of the staples, can if necessary be associated with the appendage 2c, to prevent the staples from swinging either towards or away from the appendage 2c. To prevent the part from swinging in the longitudinal direction, the upper end of at least one of the holders 2 can be V-shaped and can be provided with two hooks, the whole being done in a way which is understandable to, and easily carried out by, a person skilled in the art.

Intermediate and symmetrical portions of the beam 3 rest on the bottoms of collars 4-4' of rectangular section, fixed to the ends of a beam 5 which is parallel to the beam 3 and which, in turn, is fixed, with the possibility of rotation about a vertical axis, to the lower ends of holders 6, 6' fixed to corresponding carriages 7-7' provided at each of their ends with wheels arranged in a cross formation 8-8', which run in an overhead rail having a cross-shaped section, indicated as a whole by 9. Above the rail 9 and parallel to it, there is a similar rail with a cross-shaped profile 10, in which runs a chain 11 provided at each end of its links with wheels arranged in a cross formation 12. The rails 9, 10 are formed from a plurality of small structural steel segments, straight and curved, having their ends integral with flanges 14, provided with a large rectangular aperture 13 between the edges of the rails, these flanges enabling the various segments to be coupled together by means of bolts, to form an overhead line having the predetermined configuration required to make the suspension bars B with the parts suspended from them pass through the various treatment stations of the installation (see below). The conveyor line formed in this way is fixed by some of the flanges 14 to a supporting beam 15 which lies above it and is supported at the desired height by gantry structures 16 visible in Figures 4, 5, 6, whose bases are fixed to the ground.

The holders 6-6' are fixed rotatably to the beams 5 by means of corresponding screws 17 whose shanks pass through the beams 5 and are screwed into nuts 18 located within the tops of the collars 4-4', the whole being done in such a way that these screws are made to form a clamp which securely locks the beam 3 in the said collars. By slackening the screws 17, the beams 3 can be extracted and replaced when they are excessively dirty. The carriages 7-7' are provided in their median parts with pins 19 which project upwards, in the direction of the chain 11, on whose links are mounted at intervals driving devices which interact with the pin 19 of the leading carriage of each suspension bar and which can be disabled on command to allow the suspension bars to follow transfer paths independently of the said chain. Figure 19 shows how the driving devices for the suspension barn comprise inverted U-shaped structures 20, which are fixed at intervals on the links of the chain 11, and on whose lower ends there are pivoted catches 21 which normally converge downwards under their own weight, and also, if necessary, because of the presence of elastic means, and which are provided at their sides with wheels 22. The pin 19 is positioned between the two catches 21 of a driving device, bears on the trailing catch and has a height such that if the catches are raised by means of suitable fixed cams 23 which interfere with the wheels 22, the catches are enabled to release the pin, and the whole suspension bar, which can then be controlled independently of the driving chain 11, as stated below. Conversely, when a driving device comes into interaction with a pin 19 of a stationary suspension bar, the leading catch 21 of the device interferes with the pin which raises the catch and is positioned between this catch and the next one, and bears on the latter which drives it.

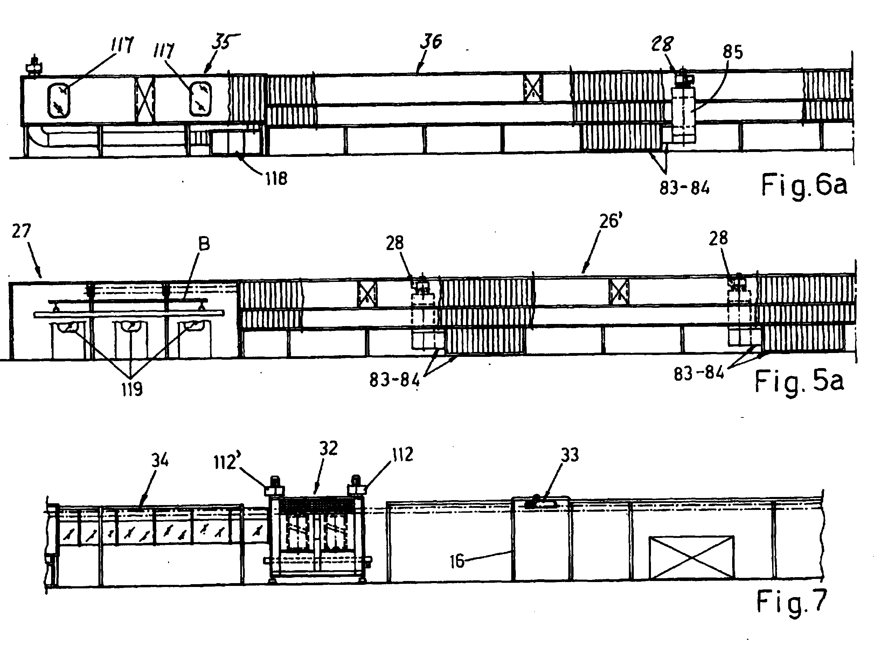

With reference to Figures 2 and 3, the possible embodiment of an installation according to the invention will now be described. In these figures, the path of the driving chains of the suspension bars is indicated by a broken line, while the path of the carriages of the suspension barn is indicated by a chained line. An operator OP1 works at a first open station 24 for the transfer and storage of the suspension bars B which are positioned parallel to each other and whose carriages 7-7' follow parallel paths 9a-9a'. By a succession of curves, the suspension barn converge on a straight path 9b, perpendicular to the preceding path, coinciding with the path 10b of the conveyor chain 11, and move towards the left of a person looking at Figure 2. At the station 24, the chain 11 follows the hairpin curve 10a and then joins the aforesaid straight path 10b, with an S-shaped path which enables the chain to engage the leading carriages of the suspension bars B to move them to the left. The operator OP1 attaches the products P to be painted to the holders 2 of the suspension bars, which are progressively positioned end to end for departure from the station 24. In the straight path 9b-10b, the suspension barn with the products suspended from them pass through a first treatment unit 25 which treats the parts with impregnant, after which the suspension bars pass through a setting or drying tunnel 26 and finally enter a dosed transfer station 27 where the suspension bars are unhooked from the driving chain and are placed, by means of a transfer system of a known type, with their carriages positioned on paths 9c-9c' which are parallel to each other and perpendicular to the path 9b along which the bars have arrived. In the transfer unit 27, the driving chain 11 follows a first S-shaped path, then a hairpin path 10c and finally a second S-shaped path to return the suspension bars to the exit of this unit and to convey them in a straight path 9b', 10b' parallel to the preceding path 9b, 10b. In the transfer unit 27, pushers and other means which are known and are therefore not shown here in detail, transfer the suspension bars and position them correctly for hooking to the driving chain at the exit. With reference to Figures 5a and 6 also, it will be seen that the transfer unit 27, unlike the unit 24, is suitably faired, with a fairing which reaches the ground, is provided with inspection hatches with portholes 119, and is connected with a seal to the setting tunnel 26 and to the following drying tunnel 26' which the suspension bars pass through on the return path 9b', 10b'. In the setting and drying chambers, as specified in greater detail below, suitable means create the necessary conditions for the drying of the impregnant with which the parts P have been treated, prevent the ingress of dust into the chambers, and prevent anomalous dispersions of heat through the end apertures of the tunnels.

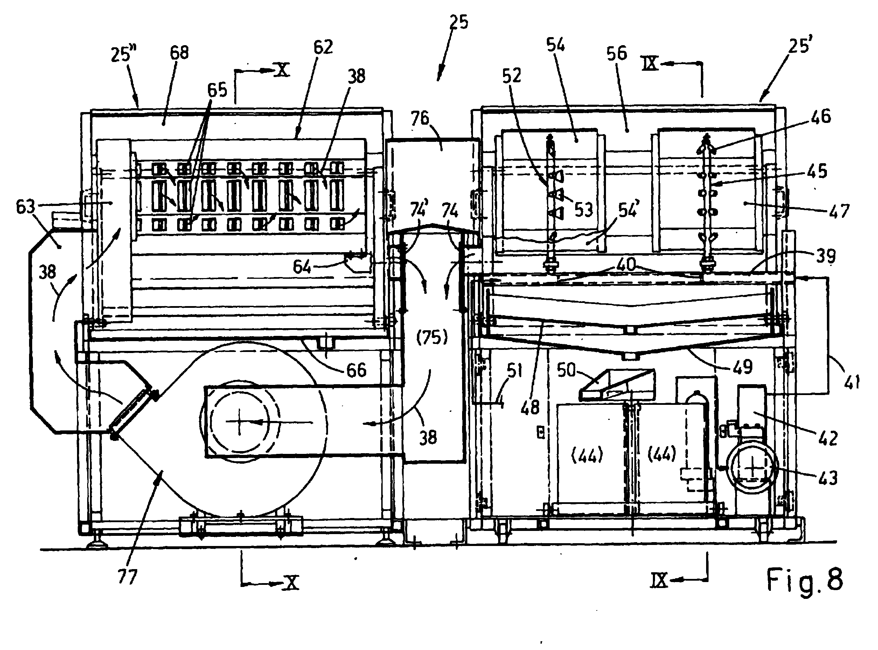

When they leave the drying tunnel 26', the suspension bars enter an open transfer and storage station 29 which is partially adjacent to the starting station 24, and in which the suspension bars are released from the driving chain 11 which follows an S-shaped path and then enters the transfer and storage structure 24 to operate in the way described above. The number 30 indicates the motive power unit which drives the endless chain 11 described herein for driving the suspension bars from the starting transfer and storage structure 24 to the final structure 29. In the structure 29, transfer means of a known type cause the carriages of the suspension bars to follow paths 9d-9d' which are parallel to each other and perpendicular to the path along which they arrived, and which subsequently converge on a straight path 9e in the first part of which the suspension bars are hooked by a second conveyor chain 11' which follows an S-shaped path 10d in the station 29 in question, and which subsequently joins the straight path 10e coinciding with the path 9e of the suspension bars. When they leave the station 29, the suspension bars with the parts follow the straight path 9e-10e and pass through a sanding unit 31, if present, which has the function of making the surfaces of the parts more thoroughly prepared to receive the paint supplied by at least one subsequent painting unit 32 located on the same path 9e-10e. The number 33 indicates the motive power unit which moves the second conveyor chain 11'. When they leave the painting unit 32, the suspension bars pass through a small tunnel 34 which, as shown in Figure 7, is of the raised type and is preferably made from transparent material for the display of the painted parts, and when they leave this tunnel the suspension bars enter a transfer and storage structure 35 which, as shown also in Figure 6a, is faired, is of the raised type and is provided with transparent portholes 117 for the display of the treated parts. Under this structure 35 there are systems 118 for producing, filtering and circulating, within the unit 35 and the subsequent tunnel connected to it, the exact quantity of hot air required for setting and drying the painted parts. In the unit 35, the suspension bars B are first released by the conveyor chain 11' which follows a first hairpin path 10f and then a winding path 10g to pick up the suspension bars again at the exit from the unit 35. Transfer means of a known type transfer the two carriages of the suspension bars entering the unit 35 on to two parallel paths 9f, 9f' perpendicular to the entry path, after which the carriages converge on a straight path 9e'-10e' which passes longitudinally through a tunnel 36 abutting the said unit 35 and which enters a further transfer and storage unit 37 where the suspension bars are released by the driving chain 11' which follows a first hairpin path 10h and then a winding path 10m to pick up the suspension bars again at the exit and to transfer them to the transfer and storage structure 24 where the suspension bars are released, while the driving chain 11' follows a winding path 10n and enters the transfer and storage structure 29 to collect the suspension bars released from the first conveyor chain 11. The final unit 37 is also faired down to the ground like the unit 35, is provided with hatches with inspection portholes, and, owing to its connection to the tunnel 36, has a sufficient circulation of air within it which contributes to the drying of the painted parts. At the side of the unit 37 where the suspension bars emerge from it, an operator OP2 unloads the painted parts from the suspension bars, so that the bars can continue empty to the subsequent loading station 24.

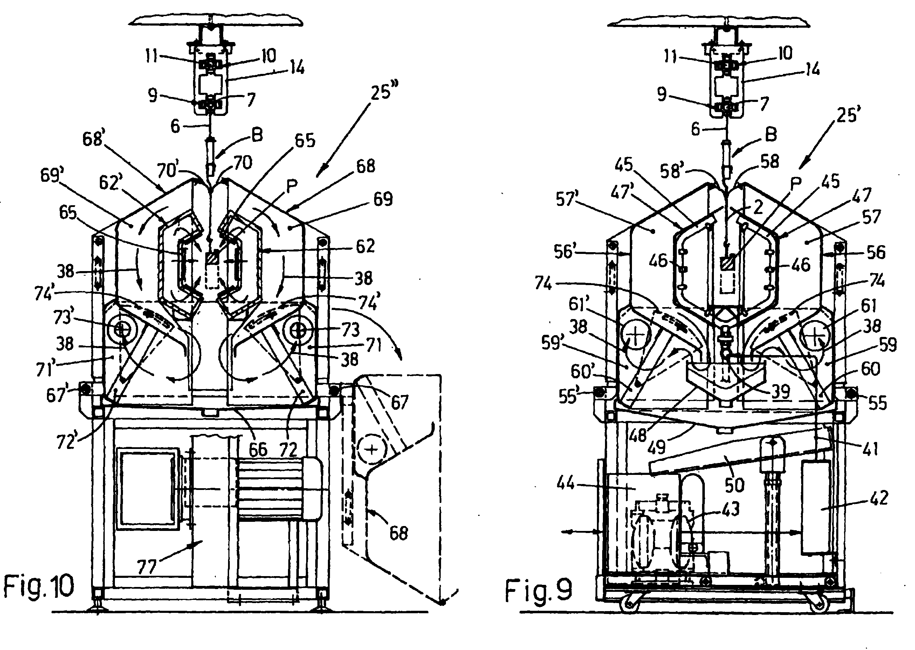

The impregnation unit 25 will now be described with reference to Figures 8, 9 and 10. This unit comprises a first section 25' which applies the impregnant to the parts by means of atomizing nozzles and which then spreads the applied impregnant, and eliminates the excess, by means of blowing nozzles, and comprises a second section 25'' capable of carrying out a further blowing of air on to the parts to make the applied layer of impregnant more uniform and to initiate the setting stage. Figures 8 and 9 show how the frame of the section 25' supports a horizontal bar 39 which is parallel to the path of the parts, is located under the parts and is divided into at least two portions by intermediate partitions 40, one end of this bar being connected to the impregnant injection circuit 41 which, in reverse order, comprises a filter 42 and a pneumatic pump 43 of the membrane type which draws the impregnant from a pair of storage containers 44. On the portion of the bar 39 into which the impregnant is injected there is fixed, in communication with the circuit, a tubular fork 45, of hexagonal shape and open at the top, which carries on its sides the nozzles 46 orientated in different ways to spray the impregnant uniformly on the lateral surface and on the ends of the part P which passes through the centre of this fork 45. On the opposing branches of the fork 45 there are fixed trapezoidal shields 47-47', preferably made from polypropylene or any suitable material to which paint does not adhere, which have the function of forming a tubular shell of precise length, open at the top and bottom, which collects the excess impregnant and causes it to drip into an underlying vessel 48 which extends along the whole length of the section 25', is fixed to the frame of this section and is shaped in the form of an inverted sloping roof, with a hole at the lowest point, which discharges into an underlying larger vessel 49 whose hole discharges into a funnel 50 with a double pivot, by means of which the impregnant can be discharged alternatively into each of the containers 44. All the parts designed to come into contact with the impregnant are made from polypropylene or are painted with a suitable anti-adhesion medium. The other portion of the bar 39 is connected to a circuit 51 for the delivery of air at precise pressure, taken for example from the compressed air main, and on this portion of the bar there is fixed, in communication with the circuit, a tubular fork 52 which is open at the top and is of hexagonal shape, on whose sides are fixed jets 53 with flat ends, orientated in such a way as to strike the parts P with blade-shaped flows of air having an inclination opposite to the direction of advance of the parts, so that they carry out a forceful spreading action which makes the layer of impregnant covering the parts uniform, with the removal of the excess impregnant which drips off and is collected by the vessel 48. The opposing branches of the fork 52 also carry externally fixed trapezoidal shields 54-54', preferably made from polypropylene, which have the function of collecting the drops of impregnant and discharging them into the vessel 48.

Composite half-shells 56-56' are pivoted longitudinally at 55-55' on the sides of the frame of the section 25'; these half-shells are also made from polypropylene and, when in the active position, form chambers 57, 57', outside the shields 47, 47' and 54, 54', which are provided in their upper parts with flexible sealing fringes 58, 58' through which the supporting holders 2 of the parts P pass, and which are open below and allow any traces of impregnant to drip into the vessel 48. Under the chambers 57, 57', the half-shells 56, 56' comprise additional chambers 59, 59', divided into two parts by filters 60, 60' and provided at their tops and at one end with apertures 61, 61' which are described more fully below.

Figures 8 and 10 show how the next section 25'' of the unit 25 comprises two opposing horizontal longitudinally arranged boxes 62, 62', shaped in such a way as to form a tunnel of hexagonal section, open longitudinally at the top and bottom and connected at one end to a pressurized air delivery duct 63, while the other ends of the said boxes are closed and are held on supports 64 of the frame of the section in question. On the inner walls of the tunnel formed by the boxes 62, 62', there are apertures 65 of linear form provided with fringes inclined in such a way that blade-shaped flows of air pass out of these apertures and strike the product uniformly, with an inclination contrary to the direction of advance, to carry out a further and more uniform spreading of the impregnant on the parts and to provide a first drying stage of the impregnant. Under the lower aperture of the blowing tunnel there is a vessel 66 for collecting any drops of impregnant which fall from the pads passing through, and this vessel discharges into a suitable collecting container which is not shown. Composite half-shells 68, 68' are pivoted longitudinally at 67, 67' on the sides of the section 25'' and are preferably made from polypropylene, in a similar way to those of the preceding section 25'; these half-shells, when in the treatment position, form chambers 69, 69' around the blowing tunnel, these chambers being provided in their upper parts with flexible seating fringes 70, 70' through which the supporting holders 2 of the parts P pass, and being open below. Under these chambers there are provided further chambers 71, 71', each divided into two parts by a filter 72, 72', and provided in their upper parts, at one end, with apertures 73, 73' adjacent to and aligned with the apertures 61, 61' of the section 25', and connected by means of these to the inlets, which can be throttled by gate valves 74, 74', of a duct 75 positioned under a casing 76 which is open at the top and located to form a bridge between the sections 25', 25'' and has a bottom in the form of a double inclined roof to discharge any drops of impregnant into the recovery vessels of the sections 25', 25''. The aforesaid duct 75 is connected to the intake of a high-pressure electric fan 77, located in the lower part of the frame of the section 25'' and having its outlet connected to the aforesaid duct 63. The path of the air in the sections 25'-25'' is indicated by the arrows 38. The pressurized air which leaves the jets 53 and the slits 65 is evacuated through the filters 60, 60' and 72, 72' which remove traces of impregnant from it, and the same air passes into the electric fan 77 which recycles it. There is an overall suction in the impregnation section 25', so that there are no appreciable inflows or outflows of air through the apertures for the passage of the products in this section, while excess air can pass out of the apertures of the section 25''.

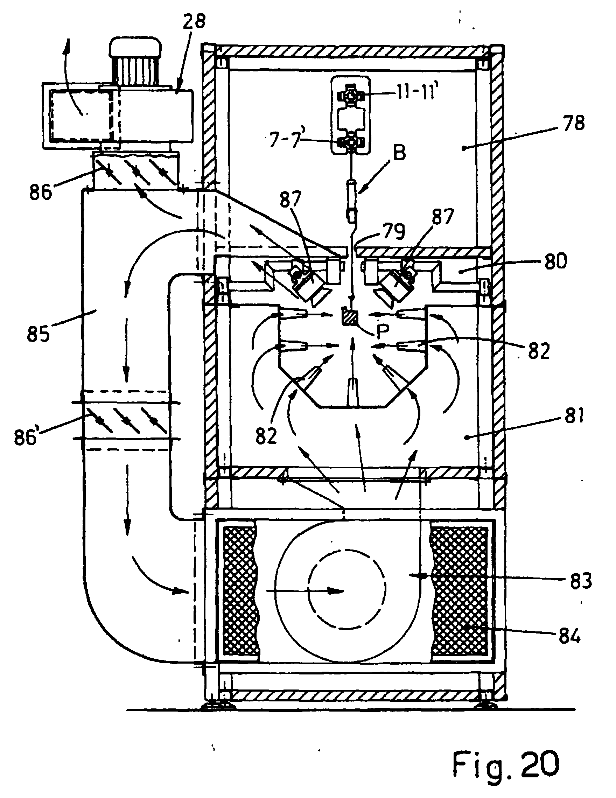

With reference also to Figures 5, 5a and 6, 6a, it will be seen that the tunnels 26, 26' and 36 are raised and faired structures, which are provided with inspection portholes at intervals and which, as shown in Figure 20, comprise an upper chamber 78 through which the guide rails 9 and 10 of the driving chains 11, 11' and of the carriages 7 of the suspension bars pass longitudinally, a longitudinal median aperture 79 being provided in the bottom of this chamber for the passage of the supporting holders 2 of the parts P which move through an intermediate chamber 80 under which is provided a chamber 81 with a U-shaped profile, which has, on its concave wall, nozzles 82 which are suitably distributed, staggered, and directed towards the part P which moves longitudinally along the mid-line of the said chamber 80. The chamber 81 is connected to the outlet of a high-pressure electric fan 83 which is located under the tunnel and whose intake is connected to a filtering and heating system 84 which is connected through the recirculation duct 85 to the chamber 80 to suck most of the air which is already hot out of this chamber. The duct 85 is connected, with the interposition of adjustable gate valves 86, to the intake of an electric fan 28, also shown in Figures 2 and 3, which discharges to the atmosphere, while further gate valves 86' are provided downstream of the valves 86 to suitably regulate the quantity of recycled air and that which is expelled through the fan 28, according to moisture parameters measured within the setting or drying tunnel by suitable sensors. The quantity of air discharged to the exterior is compensated by a corresponding quantity of ambient air which enters the moisture removal or drying tunnel through the free ends of the chamber 80. The paint drying tunnel 36 is constructed on the same principle, with the sole difference that units 87 which supply radiation to aid the drying of the paint, for example infrared lamps, can be positioned in this tunnel, in such a number and in such an arrangement that they act uniformly on the part P passing through.

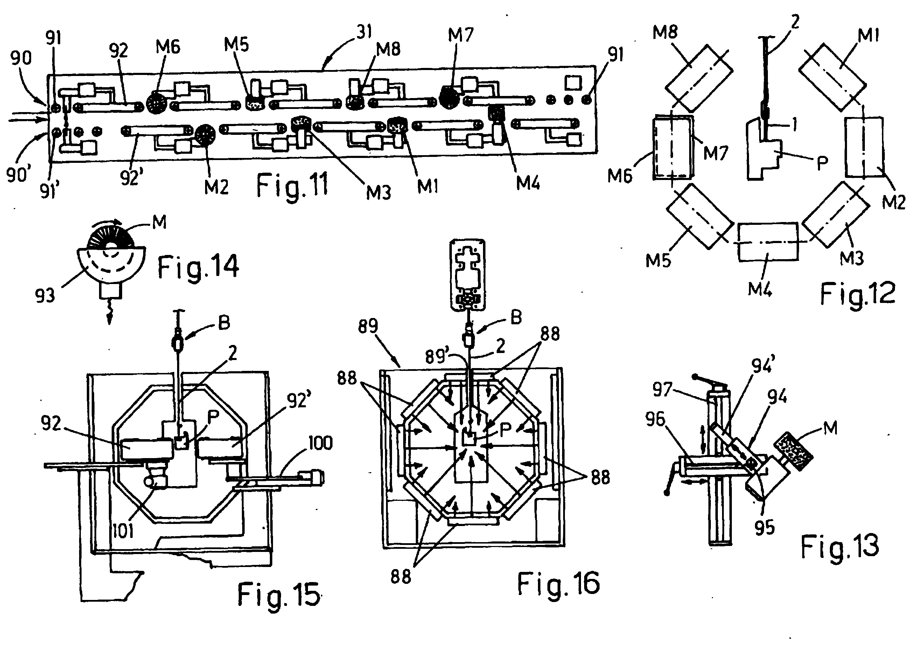

The sanding unit 31 will now be described, with reference to Figures 11-16. On the front of this unit there is an octagonal aperture 89 which has one horizontal side, is open at the top on the mid-line as indicated by 89' for the passage of the holders 2 with the part P suspended, and has opto-electronic sensors 88 mounted on its eight sides to detect the shape of the profile of the part P which passes through the centre of this aperture. The part P is damped between two parallel lines of conveyor means 90, 90', one of which (Fig. 15) is fixed while the other is movable towards and away from the fixed line, by means of the suitable guide and slide units with actuators 100, the said conveyor lines being provided with initial and final rollers 91, 91' and conveyors with vertical axes 92, 92' suitably aligned and staggered with respect to each other, those of the fixed line being driven by suitable actuators 101, while those of the movable line are idle. Between each conveyor and the next there is positioned a sanding brush M formed from abrasive strips and partially enclosed by a casing 93 as shown in Fig. 14, connected to a suction circuit for the removal of the dust resulting from the sanding. As shown in Figure 12, the abrasive brushes are arranged, for example, in succession along the sides of an imaginary octagon with one horizontal side, except on the top side along which the supporting holders 2 of the parts pass, as indicated by M1, M2, M3, M4, M5, M6, M7, M8. As shown in Figure 13, each brush is mounted on a moving element 94 which, when so commanded, can move it parallel to its own axis, while normally keeping the brush away from the part, and which is provided for this purpose with a rectilinear movement actuator 94' consisting, for example, of a pneumatic cylinder. When the part passes the position of the brush, if the latter is required to operate, the actuator 94' is activated to move the brush towards the part, along a fixed path, and after the part has passed by the actuator reverses the movement and returns the brush to the rest position. To set the brushes for correct interaction with the parts, the moving element 94 is mounted so that it can swivel on a horizontal shaft 95, parallel to the path of the parts and supported by the slide of an adjustment unit 96 which is perpendicular to the said axis 95 and is mounted, in turn, on a vertical adjustment unit 97. Figures 11 and 12 show how two brushes with vertical axes, M6 and M7, are provided in succession on one side of the sanding unit, the surface of the part which will subsequently be visible and which may have a larger extension, and which for these reasons requires more extensive and precise treatment, being orientated towards these brushes.

To avoid the need to synchronize the conveyors 92-92' with the driving chain 11' of the suspension bars, by the use of expensive solutions which are difficult to implement, a different arrangement may be provided whereby, when the parts have been picked up by the said conveyers, the carriages of the suspension bars which carry the parts are released from the driving devices 20-21 of the said chain, by means of fixed cams of the type indicated by 23 in Figure 19, in such a way that the parts are advanced solely by the action of the conveyors 92, 92' which preferably operate at a speed equal to or slightly greater than that of the said chain 11'. The cam 23 terminates at the exit from the sander, and the carriages of the suspension bars are again driven by the devices 20-21 of the chain 11'

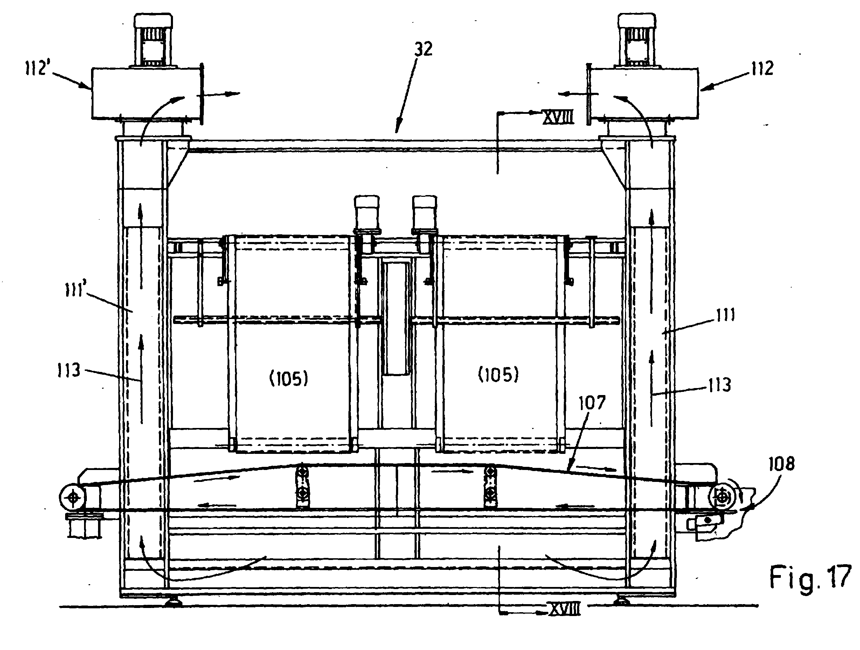

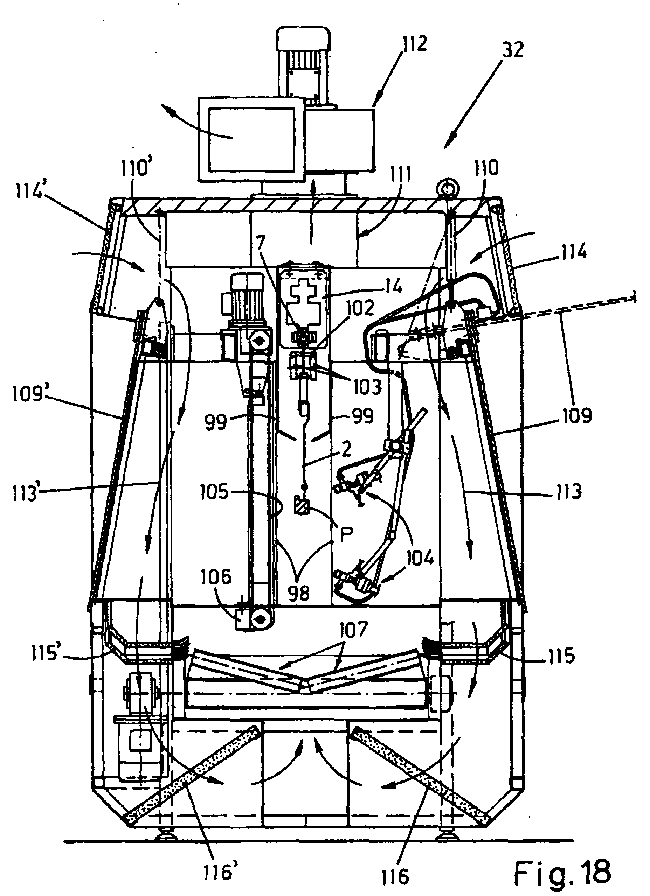

The painting unit 32 will now be described, with reference to Figures 17 and 18. This unit comprises a parallelepipedal chamber provided on its faces with vertical median apertures 98 through which the running rails of the chains 11' and of the supporting carriages of the suspension bars with the pieces pass longitudinally, these rails being protected by a suitable casing 99 open at the bottom, from which the holders 2 with the parts P project downwards for a certain distance. To ensure that the parts are treated uniformly by the fixed spray guns which operate within the unit 32, means are provided to make the suspension bars with the parts advance with a constant linear movement, independent of the movement of the driving chain 11' which would inevitably subject the suspension bars to small but still undesirable vibrations or oscillations. Figure 19 shows how the beams 5 of the suspension bars are provided at their ends, and with a symmetrical arrangement, with transverse flanges 102 which project suitably from both sides of each beam and which are, for example, made from strips of blue spring steel. When the suspension bars are about to enter the unit 32, the flanges 102 bear on the upper runs of a pair of rectilinear, horizontal, parallel and opposing conveyors with a horizontal axis 103, located within the casing 99 (Fig. 18) and moving in the direction of advance of the suspension bars, at a speed preferably slightly greater than the speed of advance of the chain 11'. The upper runs of the conveyors 103 are positioned at a height slightly above that of the flanges 102, so that the latter are made to rise on to these conveyors with a slight flexing which causes them to be attached closely to the conveyors, which are made from a rough material capable of driving the flanges 102 by friction. At the correct time, a cam 23 raises the catches 21 of the driving structure 20, to disengage the suspension bar from the chain 11'. The cam 23 terminates at the exit from the unit 32, and the catches 21 of the structure 20 are automatically engaged with the pin 19 of a suspension bar which is thus reconnected to the chain 11'.

At least two lateral and opposing painting units operate in the chamber of the station 32; these units comprise normally fixed guns 104, designed for spraying the paint on the part and comprising, opposite the guns, vertical surfaces 105 of anti-adhesion material, made in shape of fixed shields or in the form of conveyors driven in a downward direction and with a scraper device 106 at the bottom to remove the collected paint. A longitudinal conveyor of a known type 107 collects the paint flowing from the collecting surfaces 106 and from other internal parts of the unit 32 in its concave upper run, and discharges it to the exterior where the paint is recovered by a known scraping and collecting device 108.

The chamber of the unit 32 is enclosed laterally by swinging hatches 109, 109', operated by actuators 110. 110' respectively, and preferably made from transparent material to allow the viewing of the parts being painted. This chamber of the unit 32 is provided at its ends with hollow columns 111, 111' (Fig. 17) which are connected at their tops to electric fans 112, 112' discharging into the atmosphere, and whose lower ends (Fig. 18) are open under the conveyor 107 to establish, in the chamber in question, downward air currents indicated by the arrows 113, 113', causing air to be sucked to a smaller extent from the frontal entry and exit apertures 98 and to a larger extent through upper apertures with filters 114, 114', and then through filters 115, 115' located at the sides of the conveyor 107, and finally through further filters 116, 116' located under the said conveyor 107.

It is to be understood that the guns in the painting unit may be present in such a number and in such an arrangement that masking caused by the particular profile of the parts to be treated is avoided. Moreover, it is possible to provide, in the same painting unit, one or more paint guns expressly designed for treating the leading and trailing ends of the parts, and these guns, unlike the others, can be movable, so that they can be aimed correctly against the ends of the part and so that they can be provided with an automatic withdrawal movement timed correctly to match the passage of the parts.

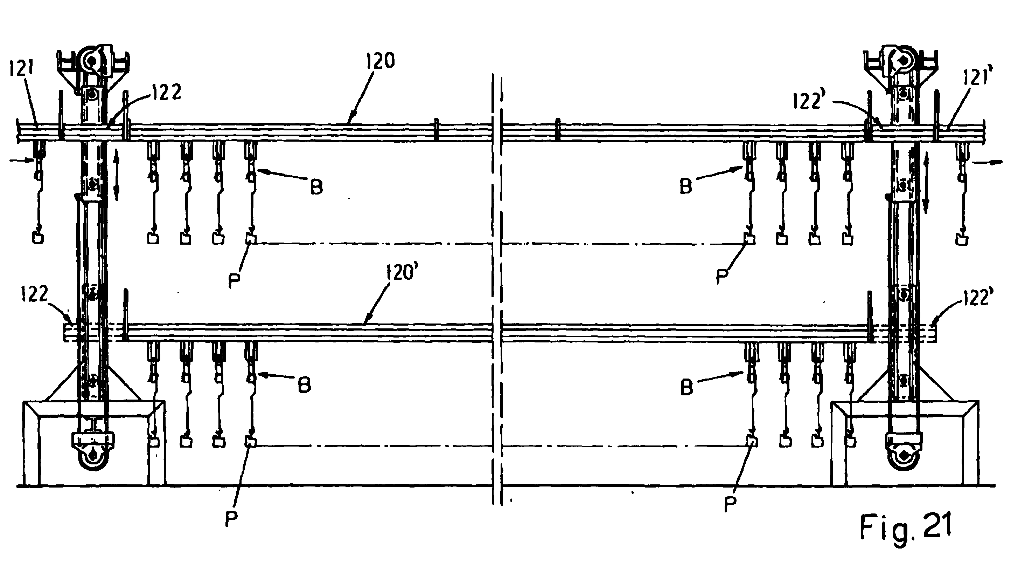

Figure 21 shows how the transfer and storage unit 37 contains two parallel and superimposed tracks 120, 120' on which the carriages with the suspension bars run, the upper track 120 being aligned with the entry and exit lines 121, 121' of the carriages, with the interposition of a lowering device 122 upstream and an elevator 122' downstream, these devices being capable of being aligned, on command, with the lower storage track 120'. The operating logic of the apparatus of Fig. 21 can be as follows. The lowering device 122 remains temporarily in the raised position to allow the suspension bars to pass from the line 121 to the line 120, while the suspension bars which were stored on this line in the preceding cycle are removed to the exit line 121' by means of the elevator 122' in the high position. When the line 120 is full of new suspension bars, the lowering device 122 collects the suspension bars from the line 121 and transfers them to the lower line 120', from which the suspension bars stored in the preceding cycle are removed cyclically, by means of the elevator 122' which moves in synchronization with the lowering device. When the lower line 120' has been filled with new suspension bars, the described cycle of simultaneous filling and emptying of the upper line 120 is repeated. In a different embodiment, the apparatus of Figure 21 can transfer the suspension bars taken from the line 121 to the line 120 and to the line 120' simultaneously, cyclically collecting a suspension bar from the lower line to be discharged to the line 121' together with the suspension bar removed from the upper line 120 when a new suspension bar taken from the line 121 is placed on the other end of this line. In this case also, the lowering device and the elevator operate in synchronization, and in the lowering phase the lowering device 122 is occupied while the elevator 122' is vacant, while in the opposite phase of elevation the lowering device 122 is vacant and the elevator 122' is occupied. The suspension bar collected from the lower storage line 120' and the suspension bar taken from the upper storage line are therefore discharged cyclically from the elevator in the raised position, allowance being made for the fact that this elevator must be empty to start the next treatment cycle.

From the discharge aperture of the buffer and storage unit 37, the operator OP2 will remove the painted parts from the suspension bars, and these parts can then be stored with a minimal use of space, being interleaved if necessary with protective sheets to protect them from the pressure of the parts above them and from dust.

It is to be understood that the description relates to a preferred embodiment of the invention, to which numerous variations and modifications may be made, particularly as regards construction, which may, for example, relate to a different architecture of the installation from that shown by way of example in Figures 2 and 3. In some installations a sanding unit may be mounted before the impregnation unit. The sanding unit may be provided with a number of abrasive brushes other than the eight described in the example of Figures 11 and 12. In other installation, it is possible to provide two painting units, placed one after the other, one of these being designed, for example, to supply a bright colour and the other to supply a dark colour, one or the other of these units being activatable according to requirements.

It is to be understood that the scope of the invention also covers the variant in which the installation is provided in simplified form with all the treatment units in line and in such a way that the treatment cycle is completed by two passes through the installation. In the first pass, the parts are sanded if necessary, then impregnated and dried, passing without treatment through the painting unit or units, while in the second pass they are sanded, painted and dried. In another variant, the installation can be divided into two sections, one of which is designed for impregnating the parts and the other for painting them. In this case, provision can be made to store the parts after the impregnation treatment only, with the staples 1 still in place, and the parts will only be returned from the store when a supply of windows is requested, and will be painted and then assembled. These and all modifications which may depend on particular requirements of the frame manufacturers and which are in any case clear to those skilled in the art, do not lie outside the scope of the invention as described above, as illustrated and as claimed below. In the claims, references shown in holders are purely for guidance and do not limit the scope of protection of the claims.

## Claims

1. Method for painting wooden frames, particularly those of windows, French windows or the like, characterized in that the individual straight parts (P) which make up the window are subjected to the stages of treatment necessary for impregnating and/or painting them, while they are still unassembled, each part being suspended in a horizontal position from overhead conveyor means which make the parts advance in single file and with a movement along their longitudinal axes, the parts being conveyed in this condition of movement through the various stages of treatment which conclude with the drying of the impregnated and/or painted parts, after which the parts are removed from the said overhead conveyor means and are stacked with the minimum use of space, while awaiting assembly for the construction of the frame which will then be already painted and ready to sell.

2. Method according to Claim 1), characterized in that the parts (P) are subjected to the following stages of treatment: loading on to the overhead conveyor means; sanding, if required, by means of abrasive brushes; impregnation, preferably by spraying; setting and drying of the impregnant; sanding by means of abrasive brushes; painting, preferably by spraying; setting and drying of the paint; discharge from the overhead conveyor means; and storage.

3. Method according to the preceding claims, in which the parts are subjected to the various treatment stages on all sides simultaneously, permitting a high precision of execution of the treatments.

4. Installation particularly suitable for the application of the method according to the preceding claims, characterized in that it comprises an overhead line for conveying, in single file, horizontal suspension bars (B), aligned with their longitudinal axes along the direction of advance, on which are suspended, by suitable means, the parts (P) to be treated, which are positioned one after another and parallel to the suspension bars, the said line being designed to convey the parts through the various means required to carry out on the parts the sanding (if required), impregnation, setting and drying of the impregnant, sanding of the impregnated parts, painting and setting and drying of the paint, a station being provided for loading the parts to be painted on to the suspension bars and a station being provided for discharging the parts from the suspension bars.

5. Installation according to the preceding claim, characterized in that each part (P) to be treated is provided with at least one pair of eyes or staples (1), driven with a sufficiently symmetrical arrangement into areas of the part which will not be visible subsequently, for example the areas which will be in contact with the glass or with the window bead or which will face the secondary frame, and the parts are suspended by these staples in a horizontal position from the lower ends of holders (2) suspended on horizontal suspension bars (B) provided with carriages (7, 7') above them which run in an overhead conveyor guide (9) surmounted by a corresponding overhead guide (10) in which runs a chain (11) provided with means (20, 21) which can be attached to the leading carriages of the suspension bars to drive them, with the parts suspended, through the various treatment stages, the said conveyor means (20, 21) being releasable if necessary from the said carriages (7, 7') to permit movements of the suspension bars for transfer and for storage if required.

6. Installation according to the preceding claims, characterized in that it comprises at least one first station (24) for the transfer and storage of the vacant suspension bars, at which an operator (OP1) suspends the parts to be painted from the said suspension bars which then convey the parts through a sanding unit (31) if present, an impregnation unit (25), and one or more setting and drying tunnels (26, 26'), and through transfer and storage units (27, 29) if present, the parts then being taken through a sanding unit (31), through at least one painting unit (32) and then being taken along a paint setting and drying path, which comprises at least one straight tunnel (36) and transfer and storage units (35, 37) at which a second operator (OP2) discharges the painted parts from the suspension bars.

7. Installation according to the preceding claims, characterized in that it comprises at least two adjacent overhead lines for conveying and guiding the suspension bars, with corresponding conveyor chains (11, 11') and corresponding motive power units (30, 33), these lines being interfaced with a transfer and storage unit (29) and the first of these lines being dedicated to the stages of sanding (if required), impregnation and subsequent drying of the parts, while the other line is dedicated to the stages of sanding, painting and subsequent drying of the parts.

8. Installation according to the preceding claims, in which the eyes or staples (1) fixed on the parts to be painted have an inverted U-shape and are inserted, for example, with nail guns provided with stops to ensure that the staples project by equal amounts.

9. Installation according to the preceding claims, in which each of the holders (2) on which the staples (1) of the parts are suspended is provided with at least one hooked lower end (2a) which interacts with the arched top of one of the staples, the said hooked end being preferably provided with an appendage (2c) projecting downward, against which the uprights of the said staple bears, to prevent the transverse swinging of the pad while it is being conveyed by the suspension bar.

10. Installation according to Claim 9), in which the appendage (2c) projecting below the lower hooked end (2a) of each of the holders (2) of the suspension bars from which the parts to be painted are suspended by the staples (1), is provided with a means (2d) capable of interacting by a snap fitting with one or both uprights of the staple, this means consisting, for example, of a shaped projection capable of snap-fitting between the uprights of the staple in order to prevent the transverse swinging of the part suspended from the conveying suspension bar.

11. Installation according to the preceding claims, in which the upper ends (2b) of the holders (2) from which the parts to be painted are suspended have a flat hooked shape and are fixed without the possibility of swinging to a first beam (3), symmetrical portions of which bear on the bottoms of collars (4, 4') of rectangular section, fixed under the ends of a second beam (5) which in turn is fixed with the possibility of rotation about a vertical axis to the lower ends of holders (6, 6') suspended from the conveyor carriages (7, 7') positioned above, the said rotatable joint being formed by screws (17) which pass through the said second beam (5), which are screwed into corresponding nuts (18) welded on the tops of the said collars (4, 4'), in such a way that these screws are made to bear with their lower ends on the said first beam (3) to hold it permanently in the supporting collars.

12. Installation according to the preceding claims, in which at least one of the supporting holders (2) of the parts to be painted can terminate at its top in a forked configuration and can be provided at the two upper ends with corresponding hooks which are attached, without the possibility of transverse or longitudinal swinging, to the beams (3) of the conveying suspension bars (B).

13. Installation according to the preceding claims, in which the carriages (7, 7') on which the suspension bars (B) run are provided at their ends with small wheels in a cross formation (8, 8') which run in an overhead rail (9) with a cross-shaped section, above which there is a similar parallel rail with a cross-shaped profile (10) in which run the wheels in cross formation (12) of the links of the chain (11) which are provided at intervals with inverted U-shaped supports (20) on whose ends are mounted oscillating catches (21) which interact with an upper appendage (19) of the holder (6) of the leading carriage of each suspension bar (B) to drive it in the treatment cycle, these catches being provided laterally with rollers (22) for interaction with fixed cams (23) which can raise the said catches when it is required to disengage them from the appendages of the carriages of the suspension bars, when these bars have to follow a transfer and storage path, in which they are positioned parallel to each other and transversely to the direction of advance.

14. Installation according to the preceding claims, in which the impregnation unit (25) comprises a first section (25') which is open at the ends and at the top, and through which the holders (2) with the parts (P) to be treated pass, this section containing atomizing nozzles (46) for spraying the impregnant on to the said parts and subsequent blowing nozzles being provided to spread the applied impregnant and to remove the excess part which falls by gravity into collection and discharge vessels (48, 49), this impregnation unit being provided with a second section (25'') which is also open at the ends and at the top, and which contains opposing blowers (62, 62') which direct uniformly distributed air jets against the parts (P), to increase the uniformity of the thickness of the impregnant which coats the parts and to initiate the setting stage, a vessel (66) being provided under the said blowers to collect and discharge the drops of impregnant which fall from the parts, and the two sections (25', 25'') of the unit in question being interconnected by a tunnel (76) with an open top and a bottom in the form of a double pitched roof to discharge the drops of impregnant which fall from the parts into the collecting vessels of the said two sections.

15. Installation according to the preceding claims, in which the nozzles (46) for supplying the impregnant and the nozzles (53) for supplying the pressurized air jets for spreading the impregnant, operating in the first section (25') of the impregnation unit (25), are mounted in the correct number and with the correct orientation on the branches of corresponding vertical hollow forks (45, 52) which in a front view have an essentially hexagonal shape, have open vertices facing upwards to allow the passage of the supporting holders of the parts and are fixed by their lower vertices to a horizontal tube (39) which is provided with intermediate partitions (40) and has one of its ends connected to the circuit (41-43) for pumping the impregnant sucked from containers (44) in which the impregnant which falls from the recovery vessels (48, 49) is collected through a funnel (50), and has the other end connected to the circuit (51) for supplying the compressed air, shields (47, 54) made wholly or partially from anti-adhesion material, for example propylene, being fixed externally to the said hollow forks to form tunnels of hexagonal section, open at the top for the passage of the holders with the parts and open at the bottom to allow the recovered impregnant to drip into the first collecting vessel (48).

16. Installation according to the preceding claims, in which the nozzles for supplying the pressurized air jets for the second section (25'') of the impregnation unit (25) consist of linear apertures (65) with fringes orientated in a direction opposite the direction of advance of the parts and formed on the inner opposite walls of rectilinear horizontal boxes (62, 62') having a profile such that they form a tunnel of hexagonal section, with a vertex open at the top for the passage of the holders with the parts and with a vertex open at the bottom to allow the impregnant to drip into the underlying recovery vessel (66), the said boxes being closed at one end and being held up by supports (64) of the frame of the section in question, while the other ends of the boxes are joined to a duct (63) connected to the outlet of a high-pressure electric fan (77) which is located under the section in question and whose intake is connected to a duct (75) which passes into the area of interconnection of the two sections of the impregnation unit, to suck air from these sections.

17. Installation according to the preceding claims, characterized in that on the sides of the frames of the two sections of the impregnation unit (25) there are corresponding pairs of horizontally pivoted composite half-shells (56, 56', 68, 68'), preferably made from polypropylene, which, when in the active position, form chambers (57, 57', 69, 69') around the treatment tunnels of these sections, the chambers being closed at their tops by flexible fringes (58, 58', 70, 70') through which the supporting holders (2) of the parts pass, and which are open below to allow any impregnant to drip into the underlying recovery vessels, the said half-shells being provided in their lower parts with additional chambers (59, 59', 71, 71') in which replaceable filters (60, 60', 72, 72') are placed and in which are provided apertures (61, 61', 73, 73') which are joined to corresponding apertures of the said suction duct (75), with the interposition of throttle gate valves (74, 74') for the partial recovery of the air supplied by the various nozzles of the impregnation unit, favouring the first section of this unit which supplies the impregnant.

18. Installation according to the preceding claims, in which the sanding unit (31) uses powered abrasive brushes, of cylindrical shape for example (M1-M8), with corresponding suction casings (93), located for example on the sides of an imaginary octagon, having its lower side horizontal and without an abrasive wheel on the top side, to allow the passage of the holders with the suspended parts which pass through the centre of this octagon, each brush being provided with means (94, 94') for moving it away from and towards the parts and being mounted, with the interposition of an orientation pivot (95) parallel to the path of the parts, on a Cartesian system of guide and slide units (96, 97) which make it possible to correctly orientate each brush which is located between every pair of conveyors (92, 92') with vertical axes, the pairs being staggered with respect to each other within two parallel conveyor lines (90, 90') of which one is fixed while the other is movable towards and away from the fixed line, for matching to the dimensions of the parts to be treated, the initial part of this unit being provided with a frame (89), of octagonal shape for example, which is open at the top for the passage of the supporting holders of the parts which pass through the centre of this frame and on whose sides there are mounted opto-electronic sensors (88) which detect the profile of the part to be treated, in order to command the operation of the abrasive brushes which are suitable for this profile.

19. Installation according to the preceding claims, characterized in that, during the passage through the sanding unit, cams (23) release the carriages of the suspension bars from the engagement with the driving chain (11') in such a way that the parts are advanced in a precise way and without oscillations or vibrations, solely by the action of the conveyors (92, 92') of this unit, which preferably operate at a speed slightly greater than that of the said chain, provision being made for the carriages of the suspension bars to automatically re-engage with the said driving chain on exit from the painting unit.

20. Installation according to the preceding claims, in which the painting unit (32) comprises a parallelepipedal chamber provided on its faces with vertical median apertures through which the running rails of the chain (11) and of the supporting carriages (7) of the suspension bars with the pieces pass longitudinally, these rails being protected by a suitable casing (99) which is open at the bottom, from which project the holders which are suspended from the said suspension bars and which support the parts, the chamber in question containing two lateral and opposing spray painting units, provided with fixed guns (104) directed towards the parts and shields of the fixed or conveyor type (105), made from anti-adhesion material, being provided opposite these painting units to collect the paint which has not struck the part and to cause it to drip on to the upper concave run of an underlying conveyor of a known type (107) which passes longitudinally through the painting chamber, which projects from the chamber, and which is provided at one end at least with known means (108) for recovering the paint.

21. Installation according to the preceding claims, in which the painting unit (32) can be provided with guns (104) which are partially movable and have a withdrawal movement, in order to correctly paint the leading and trailing ends of the parts also.

22. Installation according to the preceding claims, in which the chamber of the painting unit (32) has at its ends hollow columns (111, 111') connected at their tops to the intakes of electric fans (112, 112') which discharge to the exterior of the treatment environment, the said columns being connected at their bottoms to the part of the said chamber which lies beneath the paint recovery conveyor (107) and this part of the chamber being connected to the upper part of the painting chamber by means of replaceable filters (115, 115', 116, 116') and other filters (114, 114') being provided in the lateral upper part of the painting chamber, to suck air from the exterior and to create in the painting unit downward air currents (113, 113') which keep this unit at the correct lower pressure level with respect to the external environment.

23. Installation according to the preceding claims, characterized in that means are provided at the impregnation unit (25) and/or the painting unit (32) to disengage the carriages of the suspension bars from the driving chain (11, 11'), and flanges (102) fixed transversely in a symmetrical arrangement on the upper beams (5) of the suspension bars are made to rise on to a pair of rectilinear horizontal conveyors (103) parallel and synchronized with each other which cause the suspension bars to advance with a movement free of vibrations and oscillations, ensuring the uniformity of the coating of the parts with the impregnant and/or the paint.

24. Installation according to the preceding claims, in which the tunnels (26, 26', 36) for setting and drying the impregnant and the paint comprise a longitudinal upper chamber (78) through which the guide rails of the chain (11, 11') and the carriages (7, 7') of the suspension bars B pass longitudinally, a longitudinal median aperture being provided in the bottom of this chamber for the passage of the supporting holders of the parts which move through an intermediate chamber (80) under which there is provided a chamber (81) with a U-shaped profile whose concave wall is provided with nozzles (82) which are suitably distributed, staggered and directed towards the parts, this last chamber being connected to the outlet of an electric fan (83) which is located under the tunnel and whose intake is connected to a nearby filtering and heating unit (84) which is connected by means of a recycling duct (85) to the said intermediate chamber (80) to suck from this chamber most of the hot air supplied by the said nozzles, the recycling duct (85) being connected with the interposition of adjustable gate valves (86) to the intake of an electric fan (28) which discharges to the exterior of the treatment environment, while further gate valves (86') are provided downstream of the preceding valves, to suitably throttle the recycled air and the expelled air, according to physical parameters, for example those of moisture, measured within the tunnel by suitable sensors.

25. Installation according to the preceding claims, in which radiant means for accelerating the drying process, for example infrared lamps (87) and/or other suitable means, may be provided in the paint drying tunnel (36), and also, if appropriate, in the impregnant drying tunnel (26').

26. Installation according to the preceding claims, in which at least one of the units (35, 37') for transfer and storage of the painted parts is provided with two parallel tracks (120, 120') placed one above the other, on which the carriages of the suspension bars run, the upper line of these being aligned with the entry line (121) and exit line (121') of the carriages, with the interposition, respectively, of a lowering device (122) and an elevator (122') which can be aligned on command with the lower storage track, to transfer the suspension bars on to the two tracks placed one above the other, and subsequently to enable these suspension bars to be removed from each of the two storage tracks.
